# FASCICULE DE BREVET EUROPEEN

(11) **EP 2 007 991 B1**
(45) Date de publication et mention de la délivrance du brevet: **11.05.2016**
(21) Numéro de dépôt: 07723096.9
(22) Date de dépôt: 08.03.2007
(51) Int. Cl.: F16B 37/08, F16B 37/02, F16B 37/04, F16B 37/00

(54) **DISPOSITIF DE SERRAGE**
KLEMMVORRICHTUNG
CLAMPING DEVICE

(30) Priorité: 10.04.2006 FR 0603152
(43) Date de publication de la demande: 31.12.2008
(73) Titulaire: A. RAYMOND et Cie, 38000 Grenoble (FR)
(72) Inventeur: GELIBERT, Stéphane, F-38360 Sassenage (FR)
(74) Mandataire: RACKETTE Patentanwälte PartG mbB
(86) Numéro de dépôt international: PCT/EP2007/002001
(87) Numéro de publication internationale: WO 2007/115622

(56) Documents cités:
- FR-A1- 2 754 575
- GB-A- 657 161
- US-A- 2 373 312

## Description

### Domaine technique de l'invention

L'invention concerne un dispositif de serrage comprenant :
- un organe de vissage avec une tête d'appui et une tige munie d'un tronçon fileté,
- une agrafe de verrouillage comportant une embase équipée d'un trou de passage de la tige de l'organe de vissage, et des moyens de retenue supportés par l'embase pour être agencés à la verticale du trou de passage, et aptes à coopérer avec le tronçon fileté pour créer un blocage axial entre l'organe de vissage et l'agrafe de verrouillage.

### État de la technique

Un tel dispositif peut être utilisé pour des assemblages de plusieurs pièces par une compression axiale, notamment par serrage du type vis-écrou. Les pièces sont, par exemple, des éléments plans du type plaques, panneaux tôles, ou analogues. On connaît depuis longtemps des écrous en forme de pince, c'est-à-dire présentant la forme générale d'un U, et comprenant essentiellement une première branche portant une empreinte de vissage reliée à une deuxième branche avec un orifice pour le passage d'une vis. Un exemple de ce type de dispositif de serrage est décrit dans le document FR2754575, avec un écrou formant pince comportant en outre une partie en forme d'anneau découpée dans une patte repliée à partir de la deuxième branche pour s'étendre entre les deux branches de l'écrou et pour assurer son centrage sur l'un des éléments plans à assembler.

Mais les dispositifs de serrage connus ne sont pas complètement satisfaisants car les moyens de retenue destinés à coopérer avec le tronçon fileté de la tige sont réalisés par des empreintes de vissage dans lesquelles peuvent venir en prise les filets de ce tronçon. Pour assurer le serrage lors de l'assemblage, il est donc nécessaire de visser l'organe de vissage pour que ce dernier se translate selon un mouvement hélicoïdal par rapport à l'agrafe de verrouillage jusqu'à provoquer le serrage désiré. Le temps de montage et de manipulation pour réaliser un tel assemblage est long, notamment lorsque les dimensions des pièces à assembler nécessitent plusieurs dispositifs de serrage. Ce temps est directement lié à la longueur du tronçon fileté et à l'agencement relatif entre les pièces. Cet inconvénient présente d'autant plus d'importance que les dispositifs de serrage sont utilisés dans les chaînes finales d'assemblage, lesquelles sont généralement les plus coûteuses.

Par ailleurs, la résistance à l'arrachement de l'organe de vissage est relativement faible car elle est directement liée à la tenue mécanique des empreintes de vissage. Or, ces dernières sont constituées, par exemple, par des languettes rigides, poinçonnées et embouties à partir de l'embase, dont les extrémités libres sont engagées rigidement dans les filets du tronçon fileté. Lorsqu'un effort d'arrachement très élevé est appliqué à l'organe de vissage, il est fréquent que les languettes se déforment (axialement et/ou radialement) de manière irréversible et libèrent inopinément l'organe de

Le document DE 29916 793U couvre le préambule de la revendication 1.

### Objet de l'invention

L'invention a pour but de proposer un dispositif de serrage qui soit de conception simple et peu onéreuse, et qui permette de faciliter l'opération d'assemblage et de fiabiliser l'assemblage obtenu.

Selon l'invention, ce but est atteint par le fait que les moyens de retenue sont constitués par une pluralité de languettes flexibles et élastiques, agencées de manière convergente de sorte que leurs extrémités libres déterminent entre elles un espace libre inférieur au diamètre nominal du tronçon fileté pour venir s'engager automatiquement dans les filets du tronçon fileté lors de l'insertion axiale de la tige dans le trou de passage, et par le fait qu'un soyer est agencé à la périphérie du trou de passage en direction des languettes flexibles pour constituer une butée aux extrémités libres lors du retrait axial de la tige.

Le mouvement d'insertion axiale de l'organe de vissage dans l'agrafe de verrouillage provoque l'écartement radial des extrémités libres des languettes flexibles. En fin d'insertion, l'élasticité des languettes flexibles provoque automatiquement l'engagement de leurs extrémités libres dans les filets du tronçon fileté pour assurer la retenue et le blocage axial de l'organe de vissage par rapport à l'agrafe, de verrouillage. Pour augmenter l'effort de serrage par compression axiale, il suffit ensuite à l'opérateur de visser légèrement l'organe de vissage jusqu'à une valeur désirée de couple de serrage. En d'autres termes, l'assembtage, se fait d'abord par une simple poussée axiale de l'organe de vissage par rapport à l'agrafe de verrouillage, puis de manière facultative par un léger vissage de l'organe de vissage. Cette caractéristique facilite l'assemblage grâce à une manipulation simple et rapide de l'organe de vissage.

Lorsqu'un effort d'arrachement est appliqué à l'organe de vissage, les extrémités libres des languettes viennent prendre appui sur l'extrémité du soyer. La mobilité radiale et axiale des extrémités libres des languettes flexibles est alors supprimée. La résistance à l'arrachement de l'organe de vissage, assurant la tenue mécanique du dispositif de serrage, est par conséquent très élevée, ce qui contribue à fiabiliser l'assemblage.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 est une vue en perspective de l'agrafe de verrouillage d'un premier exemple de réalisation de dispositif de serrage selon l'invention,
- la figure 2 est une vue en coupe longitudinale de l'agrafe de verrouillage de la figure 1,
- la figure 3 est une vue en perspective du premier exemple de dispositif de serrage, représentant un élément plan à assembler et l'agrafe de verrouillage en coupe transversal,
- la figure 4 est une vue en perspective de l'agrafe de verrouillage d'un deuxième exemple de réalisation de dispositif de serrage selon l'invention,
- la figure 5 est une vue en perspective de l'agrafe de verrouillage d'un troisième exemple de réalisation de dispositif de serrage selon l'invention,
- la figure 6 est une vue en perspective de l'agrafe de verrouillage d'un quatrième exemple de réalisation de dispositif de serrage selon l'invention.

### Description de modes particuliers de réalisation

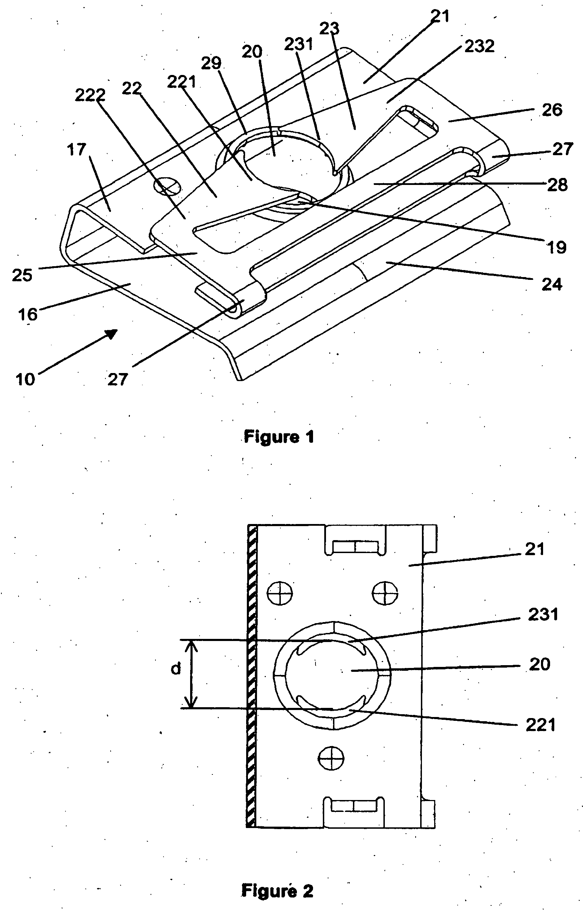

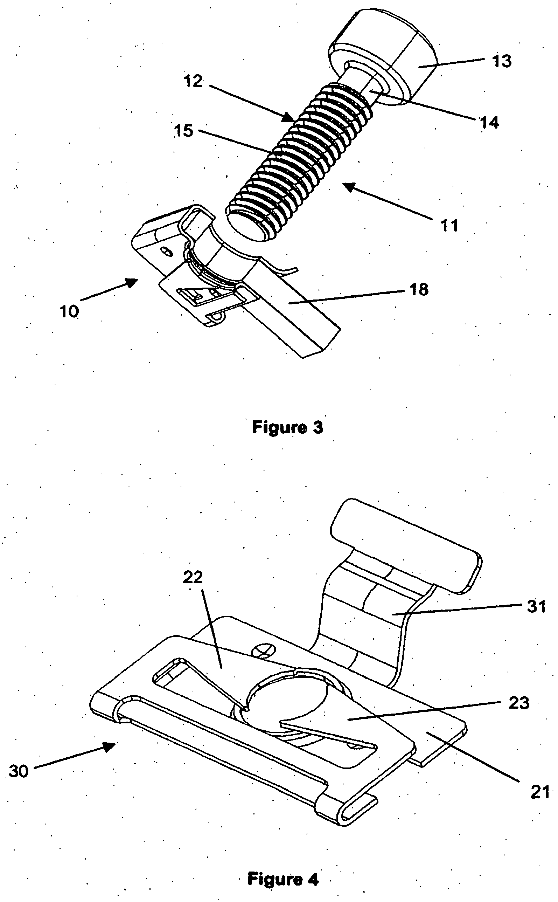

Les figures 1 à 3 illustrent un premier exemple de dispositif de serrage selon l'invention, lequel se compose d'une agrafe de verrouillage 10 et d'un organe de vissage 11. L'organe de vissage 11, en métal par exemple, visible uniquement sur la figure 3, comporte une tige 12 partiellement filetée et une tête d'appui 13, à l'extrémité dite proximale. La tige 12 comprend un tronçon supérieur lisse 14 situé près de la tête d'appui 13 et un tronçon fileté 15 inférieur s'étendant jusqu'à l'extrémité opposée, appelée extrémité distale.

Dans le premier mode de réalisation, l'agrafe de verrouillage 10 est conformée en cavalier présentant une forme générale de U, avec des première et deuxième branches 16, 17 sensiblement parallèles. L'agrafe de verrouillage 10 est obtenue par découpage, puis pliage, d'une plaque de métal.

Par la suite, le dispositif de serrage sera décrit dans un exemple particulier d'application en aucun cas limitatif, à savoir pour l'assemblage d'éléments plans du type plaques, panneaux, tôles ou analogues. Néanmoins, il va de soi, que le dispositif de serrage pourra être utilisé, plus généralement, dans toutes les applications nécessitant un système du type vis-écrou.

Dans cet exemple d'application, l'un des éléments plans à assembler, représenté partiellement sur la figure 3 et référencé 18, est destiné à venir se loger entre les branches 16, 17 de l'agrafe de verrouillage 10. Le ou les autres éléments plans de l'assemblage ne sont pas représentés. Les branches 16, 17 peuvent présenter une légère convergence pour autoriser le pré-montage et la fixation de l'agrafe de verrouillage 10 sur l'élément plan 18, avant l'assemblage final réalisé en coopération avec l'organe de vissage 11.

La première branche 16 comporte un trou de passage de la tige 12 de l'organe de vissage 11, de même que la deuxième branche 17, respectivement référencés 19, 20. La première branche 16 se termine par une portion pliée 24 vers l'extérieur destinée à faciliter la mise en place de l'agrafe de verrouillage 10 sur l'élément plan 18.

Conformément à l'invention, la deuxième branche 17 constitue une embase notée 21 supportant deux languettes flexibles 22, 23 et élastiques, disposées par rapport à l'embase 21 du côté opposé à la première branche 16. Les languettes flexibles 22, 23 sont agencées pour être convergentes de sorte que leurs extrémités libres, respectivement référencées 221, 231, sont situées à la verticale du trou de passage 20 et déterminent entre elles un espace libre noté d, inférieur au diamètre nominal du tronçon fileté 15. Chaque extrémité libre 221, 231 présente une creusure circulaire d'un diamètre correspondant au diamètre intérieur du filetage constituant le tronçon fileté 15. Les extrémités 222, 232 des languettes flexibles 22, 23, opposées aux extrémités libres 221, 231, sont respectivement solidaires d'un bras de liaison 25, 26 relié à l'embase 21 par une portion repliée 27 à 180°, constituant une zone déformable élastiquement. Les bras de liaison 25, 26 sont perpendiculaires à leurs languettes flexibles 22, 23 respectives. Dans l'exemple décrit, les languettes flexibles 22, 23 et les bras de liaison 25, 26 sont donc coplanaires, et parallèles à l'embase 21. Les bras de liaison 25, 26 sont reliés entre eux par un rigidificateur 28, rectiligne dans l'exemple.

Lorsque l'opérateur réalise l'assemblage des éléments plans grâce au dispositif de serrage décrit ci-dessus, l'agrafe de verrouillage 10 est d'abord pré-montée et fixée sur l'élément plan 18. Ensuite, le ou les autres éléments plans destinés à être assemblés avec l'élément 18, sont superposés et positionnés contre la première branche 16 ou à proximité, à l'extérieur de l'agrafe de verrouillage 10. Chaque élément plan est muni d'un orifice destiné à être traversé axialement par la tige 12. Les éléments plans peuvent être solidaires, chacun, d'une pièce respective de forme quelconque, lesdites pièces (non représentées) étant destinées à être assemblées entre elles dans une zone où les éléments plans se superposent et peuvent être assemblés par serrage.

Ensuite, la tige 12 de l'organe de vissage 11 est insérée dans les orifices des éléments plans à assembler avec l'élément 18, à partir de l'extrémité distale en direction de l'extrémité proximale, puis dans le trou de passage 19, puis au travers de l'élément plan 18, puis dans le trou de passage 20, jusqu'à venir en contact avec les extrémités libres 221, 231 des languettes flexibles 22, 23. L'insertion axiale de la tige 12 dans l'agrafe de verrouillage 10 provoque ensuite la flexion des languettes flexibles 22, 23 de telle manière que leurs extrémités libres 221, 231 s'éloignent axialement du trou de passage 20 de l'embase 21. Compte tenu du mode de support des languettes flexibles 22, 23 sur l'embase 21, ce mouvement de flexion des languettes flexibles 22, 23 s'accompagne de l'écartement des extrémités libres 221, 231 dans la direction radiale, augmentant d'autant l'espace libre d. Ces mouvements axial et radial des extrémités libres 221, 231 sont facilités et amplifiés par la présence des zones déformables constituées par les portions repliées 27. Le rigidificateur 28 supprime, ou pour le moins limite, la possibilité de rotation des bras de liaison 25 et 26 suivant l'axe perpendiculaire au plan de l'embase 21.

En fin d'insertion de l'organe de vissage 11, la tête d'appui 13 vient en butée contre l'élément plan correspondant, et l'élasticité des languettes flexibles 22, 23 provoque automatiquement l'engagement de leurs extrémités libres 221, 231 dans les filets du tronçon fileté 15. Plus précisément, les creusures prennent appui de manière linéaire contre le fond des filets pour assurer la retenue et le blocage axial de l'organe de vissage 11 par rapport à l'agrafe de verrouillage 10. La section des languettes flexibles 22, 23 au niveau des extrémités opposées 222, 232 est déterminée pour autoriser une rotation des extrémités libres 221, 231 par torsion des languettes flexibles 22, 23, de manière à s'orienter suivant l'angle d'inclinaison des filets du tronçon fileté 15. Cet aspect renforce la tenue au couple de l'agrafe de verrouillage 10.

Le blocage axial assure le serrage, et donc l'assemblage, de l'élément plan 18 avec le ou les autres éléments plans. Pour augmenter l'effort de serrage par compression axiale, il suffit ensuite à l'opérateur de visser légèrement l'organe de vissage 11 jusqu'à une valeur désirée de couple de serrage. En d'autres termes, l'assemblage des éléments plans 18 et autres, se fait d'abord par une simple poussée axiale de l'organe de vissage 11 par rapport à l'agrafe de verrouillage 10, puis de manière facultative par un léger vissage de l'organe de vissage 11. Cette caractéristique facilite l'assemblage grâce à une manipulation simple et rapide de l'organe de vissage 11.

Lorsqu'un effort d'arrachement est appliqué à l'organe de vissage 11, les extrémités libres 221, 231 des languettes flexibles 22, 23 viennent prendre appui sur l'extrémité supérieure d'un soyer 29 agencé à la périphérie du trou de passage 20 en direction des languettes flexibles 22, 23. Le soyer 29 constitue alors une butée aux extrémités libres 221, 231 de telle manière que leur mobilité radiale et axiale est supprimée. Cet effet est amplifié par la présence du rigidificateur 28. La résistance à l'arrachement de l'organe de vissage 11, assurant la tenue mécanique du dispositif de serrage, est par conséquent très élevée, ce qui contribue à fiabiliser l'assemblage obtenu.

L'agrafe de verrouillage 10 et l'organe de vissage 11 peuvent être réalisés dans d'autres matériaux adaptés, variant suivant les applications, comme par exemple en plastique moulé. D'autre part, le nombre de languettes flexibles 22, 23 peut varier suivant les applications, en fonction, par exemple, de la matière constitutive de l'agrafe de verrouillage 10 et/ou de la rigidité désirée lors de l'insertion axiale de l'organe de vissage 11 et/ou de la résistance à l'arrachement recherchée.

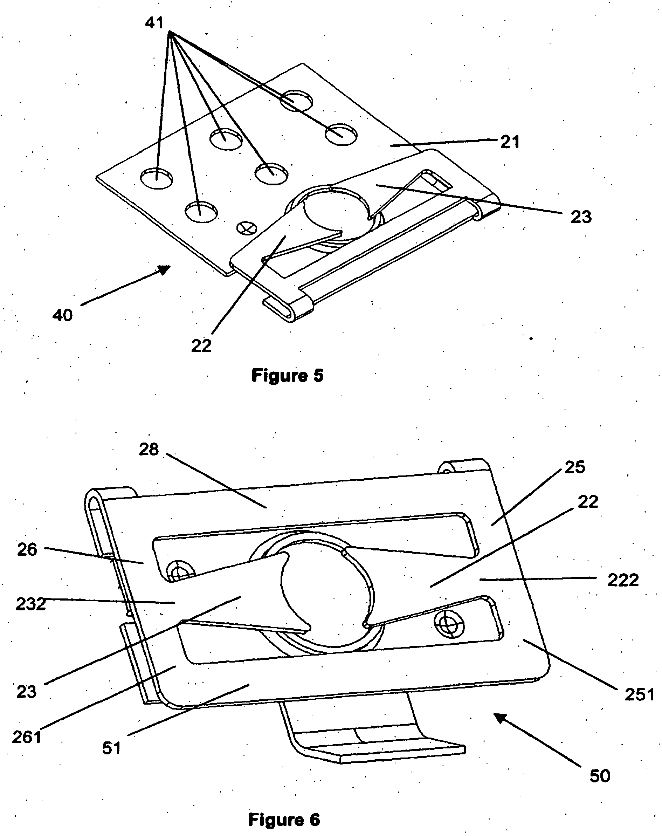

Les figures 4 et 5 représentent respectivement les agrafes de verrouillage 30 et 40 de deux autres exemples de réalisation de dispositif de serrage selon l'invention, utilisables dans des applications différentes. L'agrafe de verrouillage 30 (figure 4) se différencie de l'agrafe de verrouillage 10 par le fait que la première branche 16 est supprimée. Par contre, le fonctionnement de l'embase 21 et des languettes flexibles 22, 23 reste identique. Depuis l'un des bords de l'embase 21 s'étend une patte de fixation 31 apte à s'insérer dans un logement complémentaire prévu dans une première pièce à serrer contre une deuxième pièce maintenue par la tête d'appui 13. Les première et deuxième pièces sont constituées, par exemple, par les deux demi-alésages articulés d'un collier de fixation de tubes.

L'agrafe de verrouillage 40 (figure 5) se différencie de l'agrafe de verrouillage 30 par le fait que la patte de fixation 31 est supprimée et que l'embase 21 présente des dimensions supérieures au moins dans l'une des directions, de manière à pouvoir aménager une pluralité de trous de fixation 41. Les trous de fixation 41 autorisent, par exemple, le surmoulage de l'une des pièces à serrer sur l'agrafe de verrouillage 40, ou bien la fixation de l'agrafe sur l'une des pièces à serrer par l'intermédiaire de vis.

La figure 6 illustre l'agrafe de verrouillage 50 d'un quatrième exemple de réalisation de dispositif de serrage selon l'invention. L'agrafe de verrouillage 50 se différencie de l'agrafe de verrouillage 30 par le fait que les bras de liaison 25, 26 s'étendent au-delà de leur jonction avec les extrémités opposées 222, 232 des languettes flexibles 22, 23. Les extrémités libres 251, 261 des bras de liaison, opposées aux extrémités liées à l'embase 21, sont reliées entre elles par un rigidificateur 51. Les bras de liaison 25, 26 et les rigidificateurs 28, 51 constituent un cadre de rigidification destiné à supprimer toute possibilité de mouvement radial des extrémités libres 221, 231 autre que celui provoqué par la flexion des languettes flexibles 22, 23 pendant l'insertion de l'organe de vissage 11. Cette caractéristique augmente la résistance à l'arrachement de l'organe de vissage 11 ainsi que la tenue au couple de l'agrafe de verrouillage 50.

## Revendications

1. Dispositif de serrage comprenant :
- un organe de vissage (11) avec une tête d'appui (13) et une tige (12) munie d'un tronçon fileté (15),
- une agrafe de verrouillage (10) comportant une embase (21) équipée d'un trou de passage (20) de la tige (12) de l'organe de vissage (11), et des moyens de retenue supportés par l'embase (21) pour être agencés à la verticale du trou de passage (20), et aptes à coopérer avec le tronçon fileté (15) pour créer un blocage axial entre l'organe de vissage (11) et l'agrafe de verrouillage (10),
- un soyer (29) agencé à la périphérie du trou de passage (20),
dans lequel les moyens de retenue sont constitués par une pluralité de languettes flexibles (22, 23) et élastiques, agencées de manière convergente de sorte que leurs extrémités libres (221, 231) déterminent entre elles un espace libre (d) inférieur au diamètre nominal du tronçon fileté (15) pour venir s'engager automatiquement dans les filets du tronçon fileté (15) lors de l'insertion axiale de la tige (12) dans le trou de passage (20), et dans lequel le soyer (29) est agencé en direction des languettes flexibles (22, 23) pour constituer une butée aux extrémités libres (221, 231) lors du retrait axial de la tige (12) et **caractérisé en ce que** les extrémités opposées (222, 232) aux extrémités libres (221, 231) des languettes flexibles (22, 23) sont respectivement solidaires d'un bras de liaison (25, 26) relié à l'embase (21) par une zone (27) déformable élastiquement.

2. Dispositif selon la revendication 1, **caractérisé en ce que** les bras de liaison (25, 26) sont reliés par au moins un rigidificateur (28, 51) parallèle à l'embase (21).

3. Dispositif selon l'une quelconque des revendications 1 à 2, **caractérisé en ce que** les extrémités libres (221, 231) des languettes flexibles (22, 23) présentent des creusures.

4. Dispositif selon l'une des revendications 1 à 3, **caractérisé en ce que** l'embase (21) comporte des moyens de fixation (16) à l'une des pièces à serrer.

5. Dispositif selon la revendication 4, **caractérisé en ce que** l'agrafe de verrouillage (10) présente une forme générale de U, avec une première branche (16) sensiblement parallèle à l'embase (21), laquelle constitue une deuxième branche (17), la première branche (16) étant disposée par rapport à l'embase (21) du coté opposé aux languettes flexibles (22, 23).

6. Dispositif selon la revendication 5, **caractérisé en ce que** l'embase (21) comporte une pluralité de trous de fixation (41).

7. Dispositif selon la revendication 5, **caractérisé en ce qu'une** patte de fixation (31) s'étend depuis l'un des bords de l'embase (21).

## Patentansprüche

1. Spannvorrichtung, die
- über ein Schrauborgan (11) mit einem Lagerkopf (13) und mit einem mit einem Gewindeabschnitt (15) versehenen Schaft (12),
- über eine Verriegelungsklammer (10), die einen Sockel (21), der mit einem Durchgangsloch (20) für den Schaft (12) des Schrauborgans (11) versehen ist, und Rückhaltemittel aufweist, die von dem Sockel (21) getragen sind, um in der Senkrechten des Durchgangslochs (20) angeordnet zu sein, und die dazu eingerichtet sind, mit dem Gewindeabschnitt (15) zusammenzuwirken, um eine axiale Blockierung zwischen dem Schrauborgan (11) und der Verriegelungskammer (10) zu bilden,
- über einen Kragen (29) verfügt, der am Rand des Durchgangslochs (20) angeordnet ist,
wobei die Rückhaltemittel durch eine Anzahl von flexiblen und elastischen Zungen (22, 23) gebildet sind, die auf zusammenlaufende Art und Weise angeordnet sind, so dass ihre freien Enden (221, 231) zwischen ihnen einen Freiraum (d) bilden, der kleiner als der Nenndurchmesser des Gewindeabschnitts (15) ist, um während des axialen Einführens des Schafts (12) in das Durchgangsloch (20) automatisch in dem Gewinde des Gewindeabschnitts (15) in Eingriff zu kommen, und wobei der Kragen (29) in Richtung der flexiblen Zungen (22, 23) angeordnet ist, um während des axialen Zurückziehens des Schafts (12) einen Anschlag für die freien Enden (221, 231) zu bilden, und **dadurch gekennzeichnet, dass** die den freien Enden (221, 231) der flexiblen Zungen (22, 23) gegenüberliegenden Enden (222, 232) jeweils fest mit einem Verbindungsarm (25, 26) verbunden sind, der mit dem Sockel (21) über einen elastisch verformbaren Bereich (27) verbunden ist.

2. Vorrichtung nach Anspruch 1, **dadurch gekennzeichnet, dass** die Verbindungsarme (25, 26) durch wenigstens ein Versteifungsteil (28, 51) verbunden sind, das parallel zu dem Sockel (21) ist.

3. Vorrichtung nach einem der Ansprüche 1 bis 2, **dadurch gekennzeichnet, dass** die freien Enden (221, 231) der flexiblen Zungen (22, 23) Vertiefungen aufweisen.

4. Vorrichtung nach einem der Ansprüche 1 bis 3, **dadurch gekennzeichnet, dass** der Sockel (21) Mittel zur Befestigung (16) an einem der Festklemmteile aufweist.

5. Vorrichtung nach Anspruch 4, **dadurch gekennzeichnet, dass** die Verriegelungsklammer (10) im Wesentlichen U-förmig ist, wobei ein erster Arm (16) im Wesentlichen parallel zu dem Sockel (21) ist, der einen zweiten Arm (17) bildet, wobei der erste Arm (16) mit Bezug auf den Sockel (21) auf der den flexiblen Zungen (22, 23) gegenüberliegenden Seite angeordnet ist.

6. Vorrichtung nach Anspruch 5, **dadurch gekennzeichnet, dass** der Sockel (21) eine Anzahl von Befestigungslöchern (41) aufweist.

7. Vorrichtung nach Anspruch 5, **dadurch gekennzeichnet, dass** sich ein Befestigungsfuß (31) von einem der Ränder des Sockels (21) erstreckt.

## Claims

1. A clamping device including:
- a screw member (11) with a bearing head (13) and a rod (12) having a threaded section (15),
- a locking clip (10) having a base (21) provided with a through-hole (20) for the rod (12) of the screw member (11) and retaining means supported by the base (21) so as to be arranged vertically in line with the through-hole (20) and capable of cooperating with the threaded section (15) to produce axial locking between the screw member (11) and the locking clip (10),
- a burr (29) arranged at the periphery of the through-hole (20), wherein the retaining means consist of a plurality of flexible and elastic tongues (22, 23) arranged in a converging manner so that their free ends (221, 231) define between them a gap (d) smaller than the nominal diameter of the threaded section (15) so as to engage automatically in the threads of the threaded section (15) on axial insertion of the rod (12) into the through-hole (20) and wherein the burr (29) is arranged in the direction of the flexible tongues (22, 23) to form a stop at the free ends (221, 231) during axial removal of the rod (12), and **characterised in that** the ends (222, 232) opposite the free ends (221, 231) of the flexible tongues (22, 23) are fastened to respective connecting arms (25, 26) connected to the base (21) by an elastically deformable area (27).

2. A device according to claim 1, **characterized in that** the connecting arms (25, 26) are connected by at least one stiffener (28, 51) parallel to the base (21).

3. A device according to any one of claims 1 to 2, **characterized in that** the free ends (221, 231) of the flexible tongues (22, 23) include recesses.

4. A device according to any one of claims 1 to 3, **characterized in that** the base (21) includes means (16) for fixing it to one of the parts to be clamped.

5. A device according to claim 4, **characterized in that** the locking clip (10) is generally U-shaped with a first branch (16) substantially parallel to the base (21), which constitutes a second branch (17), the first branch (16) being disposed relative to the base (21) on the side opposite the flexible tongues (22, 23).

6. A device according to claim 5, **characterized in that** the base (21) includes a plurality of fixing holes (41).

7. A device according to claim 5, **characterized in that** a fixing lug (31) extends from one edge of the base (21).
